# EUROPEAN PATENT APPLICATION

(11) **EP 4 451 030 A1**
(43) Date of publication of application: **23.10.2024**
(21) Application number: 24170912.0
(22) Date of filing: 17.04.2024
(51) Int. Cl.: G02B 6/44, H02G 15/007

(54) **CABLE STRAIN RELIEF ASSEMBLIES**

(30) Priority: 18.04.2023 US 202363460286 P
(71) Applicant: Corning Research and Development Corporation, Corning, NY 14831 (US)
(72) Inventor: Hoehn, Holger, 12555 Berlin (DE); Swiercz, Konrad, Mariana Cynarskiego (PL); Wilcox, Dayne, El Cerrito, 94530 (US)
(74) Representative: Elkington and Fife LLP

(57) **Abstract**

Cable strain relief assemblies include at least one cable support member having an upper cantilevered end, a lower mating section, and a medial elongated portion disposed between the upper cantilevered end and the lower mating section; and at least one base member oriented substantially perpendicular to the cable support member upon assembly. The cable strain relief assembly is configured to resist longitudinal forces of several pounds on a plurality of fiber optic cables, having optical fibers contained therein, and prevent optical fiber movement within outer cable jackets of the fiber optic cables.

## Description

### RELATED APPLICATIONS

This application claims the benefit of priority to U.S. Provisional Application Serial No. 63/460,286 filed on April 18, 2023, the content of which is relied upon and incorporated herein by reference in its entirety.

### BACKGROUND

The present disclosure relates to cable strain relief assemblies, and particularly cable strain relief assemblies for fiber optic cables used in enclosures, e.g., fiber optic enclosure/closures.

To provide improved performance to subscribers, communication and data networks are increasingly employing optical fiber. The benefits of optical fiber are well known and include higher signal-to-noise ratios and increased bandwidth. To further improve performance, fiber optic networks are increasingly providing optical fiber connectivity all the way to end subscribers. These initiatives include various fiber-to-the-premises (FTTP), fiber-to-the-home (FTTH), and other fiber initiatives (generally described as FTTx). In this regard, fiber optic networks such as a passive optical network (PON) enables optical fiber to serve multiple premises. A PON configuration generally reduces the amount of optical fiber and central office equipment compared to point-to-point optical network architectures.

A fiber optic network provides optical signals from switching points over a distribution network which includes fiber optic feeder cables. The switching points include optical line terminals (OLTs) or forward lasers/return receivers that convert electrical signals to and from optical signals. The optical signals may then be carried over the fiber optic feeder cables to local convergence points (LCPs).

The LCPs serve as consolidation points for splicing and making cross-connections and interconnections, as well as providing locations for optical couplers and splitters. The optical couplers and splitters in the LCPs enable a single optical fiber to serve multiple subscriber premises. Fiber optic cables, such as distribution cables, exit the LCPs to carry optical signals between the fiber optic network and the subscriber premises.

Typical subscriber premises include single-dwelling units (SDU), multi-dwelling units (MDU), businesses, and/or other facilities or buildings. End subscribers in the subscriber premises may contain network devices configured to receive electrical signals as opposed to optical signals. Thus, optical network terminals (ONTs) and/or optical network units (ONUs) may be provided at the subscriber premises to convert optical signals received over the fiber optic cables to electronic signals.

Because LCPs are typically configured to service multiple premises, the fiber optic cables leaving the LCPs are typically run to one or more intermediate fiber distribution terminals (FDTs). FDTs facilitate FTTx applications by providing network access points to the fiber optic network to groupings of subscriber premises. Optical interconnections to the subscriber premises are typically provided via indoor/outdoor drop cables are optically interconnected with the fiber optic cables within the FDTs. The FDTs may also provide a consolidated location for technicians or other installation personnel to make and protect splices and/or connections between the drop cables and the fiber optic cables as opposed to making splices and/or connections in sporadic locations.

A fiber optic enclosure/closure may be part of a fiber optic terminal that may serve as an LCP or FDT in a fiber optic network. Once outside, the fiber optic cables may be routed to the subscriber premises, for example, to support the multi-dwelling units. The fiber optic cables exiting a fiber optic enclosure may need strain relief as optical fiber movement may damage the cable or cause signal attenuation. Conventional fiber optic enclosures typically have at least one strain relief mechanism inside to relieve strain in the separate fiber optic cables. While conventional mechanisms providing strain relief may offer some benefits, many do not provide components that can accommodate multiple assemblies or arrangements that provide flexibility and quick installation. Accordingly, there is a need for improved cable strain relief assemblies, particularly for use in fiber optic enclosures.

### SUMMARY

Embodiments disclosed herein related to cable strain relief components, assemblies, and methods particularly for use in or with fiber optic enclosures and elements which may be included in or assist with fiber optic enclosure assemblies. The fiber optic enclosures may be part of a fiber optic terminal in a fiber optic network. The fiber optic enclosures may include openings in the walls of the fiber optic enclosure configured to couple with one or more strain relief assemblies disclosed herein.

According to one aspect, cable strain relief assemblies may include one or more elongated support members coupled to a mating base member. Upon assembly, the elongated support member is coupled to the mating base member using ore or more cable guide members coupled to the support member(s) and/or the base member(s).

According to another aspect, cable strain relief assemblies include at least one support member having an upper cantilevered end, a lower mating section, and a medial elongated portion disposed between the upper cantilevered end and the lower mating section; and at least one base member oriented substantially perpendicular to the elongated member upon assembly with the support member. The cable strain relief assembly is configured to resist longitudinal forces of several pounds on a plurality of fiber optic cables, having optical fibers contained therein, and prevent optical fiber movement within outer cable jackets of the fiber optic cables.

Additional aspects of the embodiments disclosed herein include a cable strain relief assembly that comprises at least one cable support member; at least one base member comprising at least one base cable support, wherein the at least one base member is coupled to the at least one cable support member, and the at least one base member includes at least a portion oriented substantially perpendicular to the at least one cable support member; and at least one clip member configured for coupling with the at least one cable support member and the at least one base member.

The cable support member can further comprise an upper cantilevered end, a lower mating section, and a medial elongated portion disposed between the upper cantilevered end and the lower mating section; a lower extension integrally connected to the lower mating section; lower mating section configured to engage with the clip member; at least one recess; at least one aperture; at least one surface having curvature configured to complement an outer surface of a cable; at least one sidewall having a hook-like shape where the hook-like shape of the clip member is configured to engage with a rear portion of the at least one base cable support.

In preferred configurations, the cable strain relief assembly is configured to resist longitudinal forces of at least about 5 pounds force (Ibf) to about 10 pounds force (lbf) on at least one of a plurality of fiber optic cables having optical fibers contained therein. Moreover, the cable strain relief assembly is preferably configured to prevent optical fiber movement within outer cable jackets of at least one of the pluralities of fiber optic cables.

According to yet another aspect, a method of assembling a cable strain relief assembly comprises positioning at least one clip member against at least one cable support member; positioning the at least one cable again the at least one clip member; moving the at least one clip member to engage with at least one base cable support; and fastening the at least one clip member to the at least one cable support member such that at least one cable support member, the at least one clip member, and the at least one base cable support are substantially secured together.

Additional features will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The accompanying drawings are included to provide a further understanding and are incorporated in and constitute a part of this specification. The drawings illustrate one or more embodiment(s), and together with the description serve to explain the principles and operation of the various embodiments.
FIG. 1 is a front isometric view of an embodiment of a cable strain relief assembly in accordance with embodiments disclosed herein;
FIG. 2 is a front exploded view of a cable support member included in a strain relief assembly in accordance with embodiments disclosed herein;
FIG. 3A is a front isometric view of an assembly, including various elements which may be included in a cable strain relief assembly in accordance with embodiments disclosed herein;
FIG. 3B is a rear view of the assembly shown in FIG. 3A;
FIG. 4 is an isometric view of a base member included in a strain relief assembly in accordance with embodiments disclosed herein;
FIG. 5A is a partially exploded isometric view of a cable strain relief assembly in accordance with embodiments disclosed herein;
FIG. 5B is a side isometric view of the cable strain relief assembly shown in FIG. 5A;
FIG. 5C is a rear isometric view of a portion of the cable strain relief assembly shown in FIG. 5A; and
FIG. 6 is an enlarged view of the portion of the cable strain relief assembly shown in FIG. 5C.

### DESCRIPTION

Various exemplary embodiments of the disclosure will now be described with particular reference to the Drawings. Exemplary embodiments of the present disclosure may take on various modifications and alterations without departing from the spirit and scope of the disclosure. Accordingly, it is to be understood that the embodiments of the present disclosure are not limited to the described exemplary embodiments, but are to be controlled by the limitations set forth in the claims and any equivalents thereof.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the singular forms "a," "an," and "the" encompass embodiments having plural referents, unless the content clearly dictates otherwise. As used in this specification and the appended claims, the term "or" is generally employed in its sense including "and/or" unless the content clearly dictates otherwise.

Spatially related terms, including but not limited to, "lower," "upper," "beneath," "below," "above," and "on top," if used herein, are utilized for ease of description to describe spatial relationships of an element(s) to another. Such spatially related terms encompass different orientations of the device in use or operation in addition to the particular orientations depicted in the figures and described herein. For example, if an object depicted in the figures is turned over or flipped over, portions previously described as below or beneath other elements would then be above those other elements.

Cartesian coordinates may be used in some of the Figures for reference and are not intended to be limiting as to direction or orientation.

For purposes of description herein, the terms "upper," "lower," "right," "left," "rear," "front," "vertical," "horizontal," "top," "bottom," "side," and derivatives thereof, shall relate to the disclosure as oriented with respect to the Cartesian coordinates in the corresponding Figure, unless stated otherwise. However, it is to be understood that the disclosure may assume various alternative orientations, except where expressly specified to the contrary.

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements.

Embodiments disclosed herein include cable strain relief assemblies and related components for strain relief of cables, particularly fiber optic cables. Each cable strain relief assembly disclosed herein provides strain relief by reducing the strain on each fiber optic cable and coupling the cable to an elongated support member thereby resisting longitudinal movement of each fiber optic cable.

Each cable strain relief assembly is configured to substantially resist longitudinal forces of several pounds, e.g. up to ten (10) pounds, on the plurality of fiber optic cables by applying sufficient forces normal to the longitudinal axis of each the plurality of fiber optic cables thereby preventing optical fiber movement within outer cable jackets (not shown). Optical fiber movement may cause undesirable effects, for example, signal attenuation and/or breakage. The cable strain relief assemblies 100 are also preferably configured to resist longitudinal forces of over ten (10) pounds on one or more fiber optic cables, depending on the nature of the materials of manufacture for the assembly and/or the use of clamps, or upon coupling with elements of the mating base member.

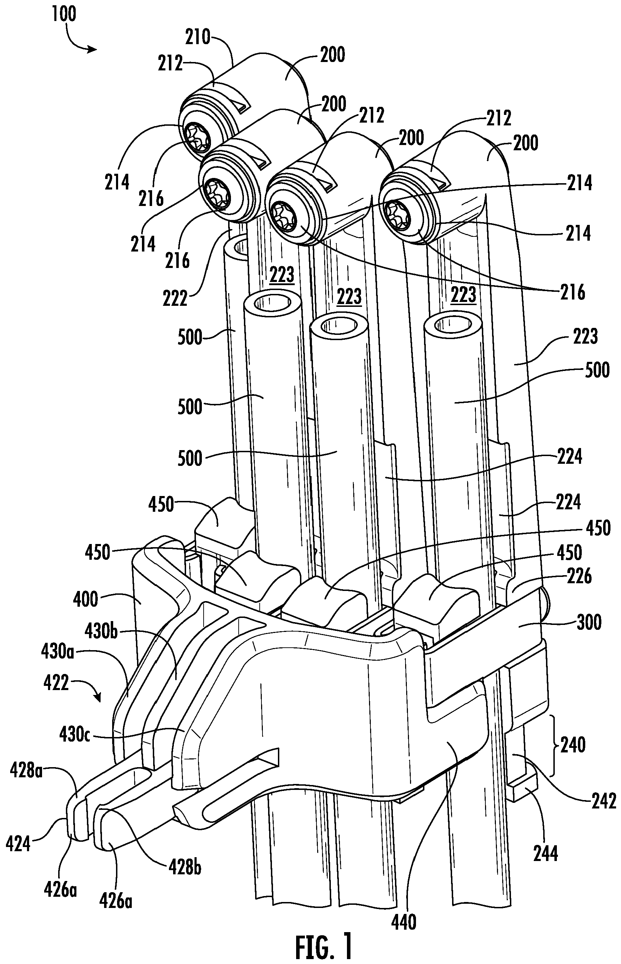

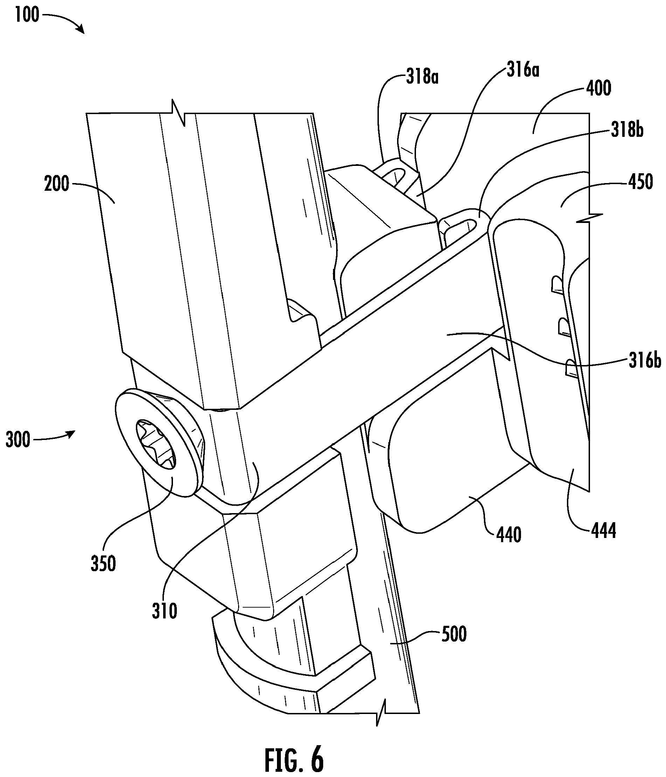

FIGs. 1-6 illustrate exemplary embodiments of cable strain relief assemblies and methods of assembling cable strain relief assemblies. One embodiment of a cable strain relief assembly 100, as particularly shown in FIG. 1, includes at least one cable support member 200, at least one clip assembly 300 having at least one clip member 310, and at least one base member 400. Each clip member 310 is configured to couple and/or engage with each cable support member 200 and a portion of the base member, as will be further described. Upon assembly, elements of the strain relief assembly 100 are configured to provide strain relief to one or more fiber optic cables 500. The fiber optic cables 500 are schematically shown in the figures as a tube shape. However, this is a schematic representation only. Accordingly, the fiber optic cables may be any configuration and include any elements which are known in the prior art.

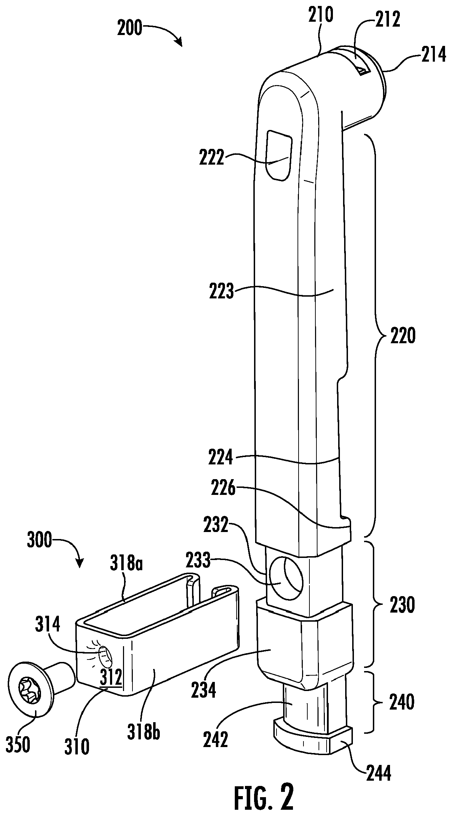

Still referring to FIG. 1, at least one element of the clip assembly 300 and the base member 400 are oriented substantially perpendicular to at least one cable support member 200 such that the at least one support member 200, the at least one clip assembly 300, and the at least one base member 400 are configured for coupling and/or mating. Referring particularly to FIGs. 1 and 2, each support member 200 includes an upper cantilevered end 210, a medial elongated portion 220, a lower mating section 230, and a lower extension 240. Each support member 210 further includes a plurality of recesses and openings configured for receiving and/or routing of other elements (not shown). For example, portions of the fiber optic cables or another element (e.g. Kevlar strands from a cable or a zip tie) may be received or routed into and out of the plurality of recesses and/or openings .

In this embodiment, the upper cantilevered end 210 includes an aperture 214 that facilitates coupling of the upper cantilevered end 210 with an upper end fastening element 216 and a top recess 212. The medial elongated portion 220 includes a portion having a surface 223 with curvature that complements the outermost shape of the fiber optic cable 500, as particularly shown in FIG. 1. The medial elongated portion 220 further includes a recess 224 and a lip portion 226. The lower mating section 230 has an outer profile 232 that is smaller than that of the lip portion 226 of the medial elongated portion 220. The lower mating section 230 is configured to engage with the clip assembly 300. As such, the lower mating section 230 includes a thru-hole 233. The thru-hole 233 is configured for engagement with a fastening element 350 included in the clip assembly. The lower extension 240 includes an upper extension section 242 and a lower extension section 244. The lower extension 240 is configured such that another element, such as a zip tie or a cable strand may be wrapped around at least a portion of the upper extension section 242. The lower extension section 244 is thus configured to act as a stop and prevent movement of elements which may be tightly wrapped around the lower extension 240. The lower mating section 230 also preferably has an outer profile 234, which complements and/or aligns with the lip portion 226 of the medial elongated portion 220.

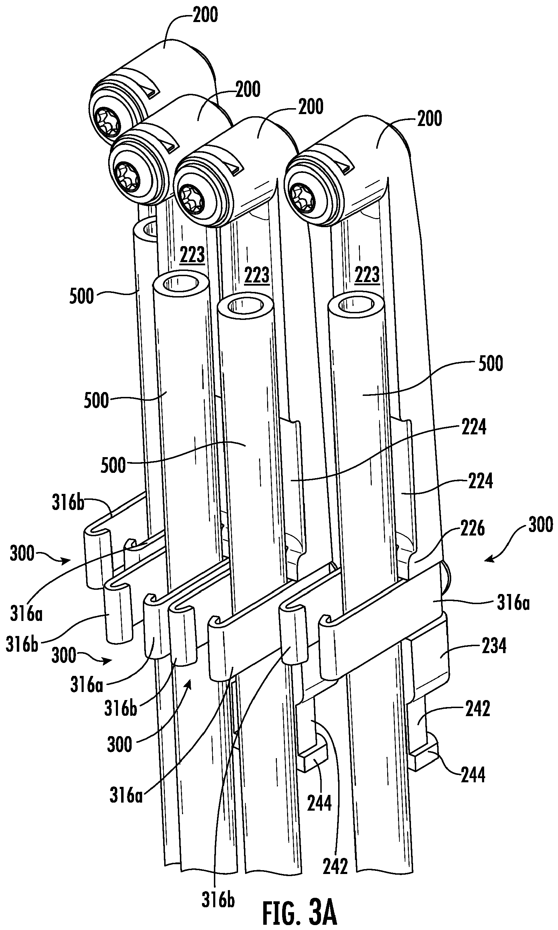

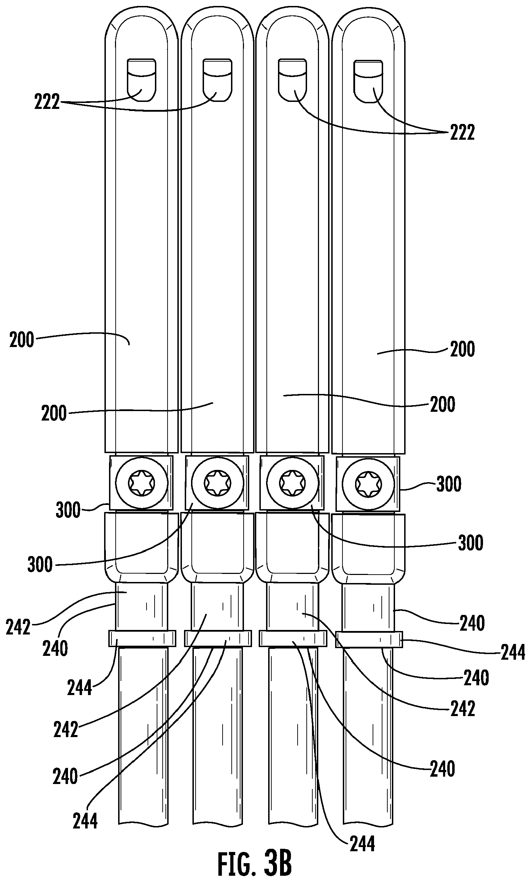

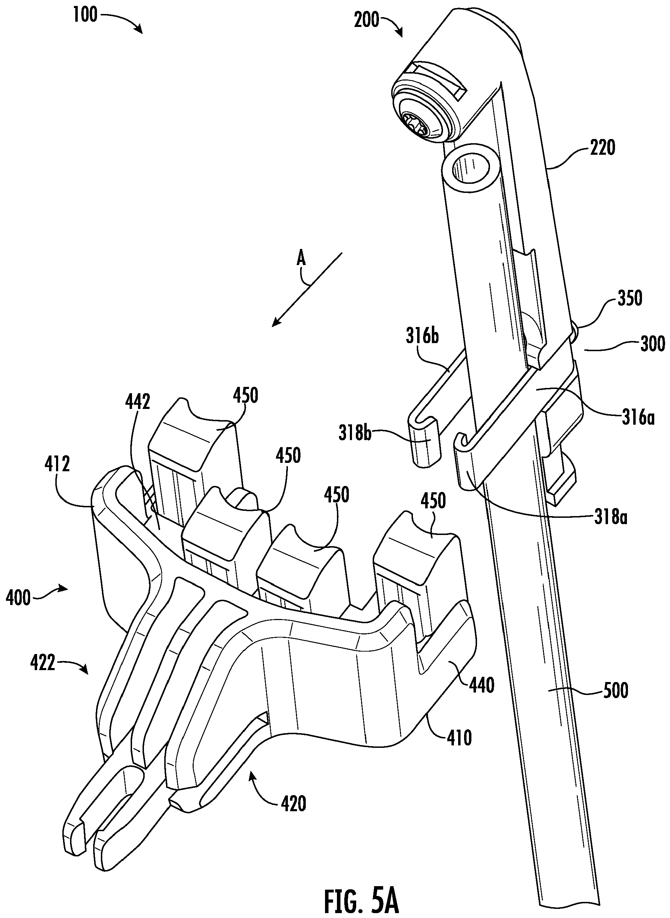

Referring to FIGs. 2, 3A and 3B, the clip assembly 300 includes a clip member 310 having a front wall 312 with a thru-hole 314 contained therein, clip sidewalls 316a, 316b, and clip engagement elements 318a, 318b having a hook-like shape. Also included in the clip assembly 300 is a clip fastener 350 configured for positioning within the thru-hole 314. The clip fastener 350 preferably includes threads or another type of engagement mechanism that allows for a secure connection by rotating and/or snapping the clip fastener 350 in place. For example, the clip fastener 350 and the thru-hole 314 may both include male-female threaded engagement elements (not shown). Engagement of the clip assembly 300 with the additional elements of the strain relief assembly will be described with reference to FIGs. 5A-5C. Alternatively, the clip member 310 may be configured in such a way that the use of an additional fastener is not needed for substantially secure engagement of the clip member 310, the base member 400, and the cable support member 200.

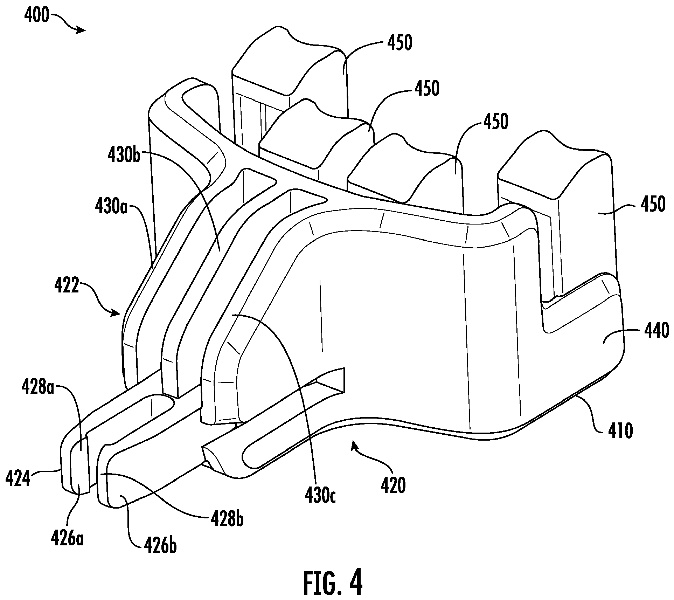

Referring particularly to FIGs. 4 and 5A, the base member 400 includes a base body 410 having a base wall 412 that extends across the base, a front engagement section 420 integrally coupled to the base wall 412, and a rear engagement section 440 integrally coupled to the base wall 412. In preferred configurations, the engagement sections 420, 440 are integrally connected. The front engagement section 420 is configured to connect with other elements that may be connected to a strain relief assembly. The front engagement section 420 includes a lower engagement portion 424 and an upper engagement portion 422. The lower engagement portion includes arm 426a, 426b with inwardly curved ends 428a, 428b. The upper engagement portion includes a plurality of engagement elements, including outer engagement elements 430a, 430c and an inner engagement element 430b. Additional inner engagement elements may, however, be included, depending on the desired width of the base member. The rear engagement section 440 of the base member 400 includes base cable supports 450 with a curved profile that complements a curved outer surface of a fiber optic cable, as particularly shown in FIG. 5A.

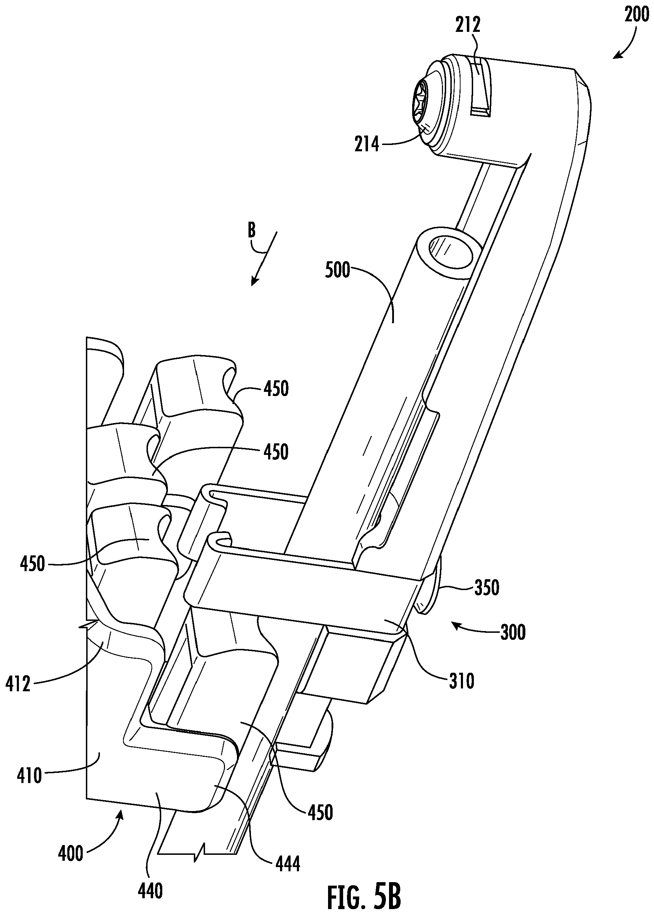

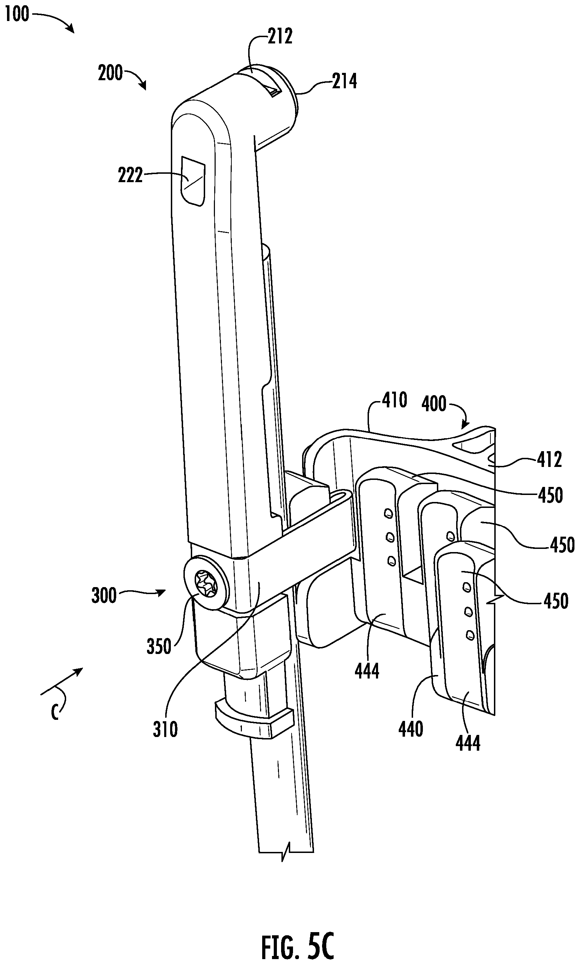

FIGs. 5A-5B illustrate a method of assembling a cable strain relief assembly. In FIG. 5A, the cable support member 200, the clip assembly 300, and the cable 500 are pre-assembled and a force is applied to position these elements to move in a direction toward the base member 400, as represented by arrow A. In FIG. 5B, a force is applied to the cable support member 200, the clip assembly 300, and the cable 500 such that the clip assembly engages with a base cable support 450 moving in a downward direction, as represented by arrow B. Next, in FIG. 5C, the clip fastener 350 is moved in a direction toward the cable support member 200, as represented by arrow C, and rotated within the thru-hole 312 to engage with a mechanical engagement (e.g. thread) such that the clip assembly 300 is secured against the cable support member 200.

Method of assembling a cable strain relief assembly may therefore include the following steps: providing a cable support member, a fiber optic cable, a clip assembly, and a base member; positioning a portion of the clip assembly 300, e.g. a clip member, against the cable support member; positioning the cable within the clip assembly 300, moving the clip assembly 300 to engage with a base cable support 450 of the base member 400; and fastening the clip assembly 300 against the cable support member such that at least one cable support member, the clip assembly, and the at least one base cable support are substantially secured together. In preferred configurations, each of these respective elements are substantially secured such optical fiber movement within outer cable jackets of the fiber optic cables is prevented.

Elements of the cable strain relief assemblies disclosed herein are preferably manufactured from one or more of strong, resilient materials, for example, a thermoplastic, thermoplastic elastomer, or a thermoplastic polyester elastomer. Elements of the clip assembly, however, are preferably manufactured from materials that allow for stamping such as sheet metal.

As used herein, it is intended that terms "fiber optic cables" and/or "optical fibers" include all types of single mode and multi-mode light waveguides, including one or more optical fibers that may be up-coated, colored, buffered, ribbonized and/or have other organizing or protective structure in a cable such as one or more tubes, strength members, jackets or the like. The optical fibers disclosed herein can be single mode or multi-mode optical fibers. Likewise, other types of suitable optical fibers include bend-insensitive optical fibers, or any other expedient of a medium for transmitting light signals. Examples of bend-insensitive, or bend resistant, optical fibers are commercially available from Coming Incorporated.

Many modifications and other embodiments not set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims. It is intended that the embodiments cover the modifications and variations of the embodiments provided they come within the scope of the appended claims and their equivalents. Although specific terms are employed herein, they are used in a generic and descriptive sense only and not for purposes of limitation.

## Claims

1. A cable strain relief assembly, comprising:
at least one cable support member;
at least one base member comprising at least one base cable support, wherein the at least one base member is coupled to the at least one cable support member, and the at least one base member includes at least a portion oriented substantially perpendicular to the at least one cable support member; and
at least one clip member configured for coupling with the at least one cable support member and the at least one base member.

2. The cable strain relief assembly of claim 1, wherein the at least one cable support member comprises an upper cantilevered end, a lower mating section, and a medial elongated portion disposed between the upper cantilevered end and the lower mating section.

3. The cable strain relief assembly of claim 2, wherein the at least one cable support member comprises a lower extension integrally connected to the lower mating section.

4. The cable strain relief assembly of claim 2 or claim 3, wherein the at least one cable support member comprises a lower mating section configured to engage with the clip member.

5. The cable strain relief assembly of claim 2 or claim 3, wherein the at least one cable support member comprises at least one recess.

6. The cable strain relief assembly of any one of claims 2-5, wherein the at least one cable support member comprises at least one aperture.

7. The cable strain relief assembly of any one of claims 2-6, wherein the at least one cable support member comprises at least one surface having curvature configured to complement an outer surface of a cable.

8. The cable strain relief assembly of any one of claims 2-7, wherein the at least one clip member comprises sidewall having a hook-like shape.

9. The cable strain relief assembly of claim 8, wherein the hook-like shape of the at least one clip member is configured to engage with a rear portion of the at least one base cable support.

10. The cable strain relief assembly of any one of claims 2-9, wherein the cable strain relief assembly is configured to resist longitudinal forces of up to 5 lbf on at least one of a plurality of fiber optic cables having optical fibers contained therein.

11. The cable strain relief assembly of claim 10, wherein the cable strain relief assembly is configured to prevent optical fiber movement within outer cable jackets of at least one of a plurality of fiber optic cables.

12. The cable strain relief assembly of any one of claims 2-9, wherein the cable strain relief assembly is configured to resist longitudinal forces of up to 10 lbf on at least one of a plurality of fiber optic cables having optical fibers contained therein.

13. The cable strain relief assembly of claim 12, wherein the cable strain relief assembly is configured to prevent optical fiber movement within outer cable jackets of at least one of a plurality of fiber optic cables.

14. The cable strain relief assembly of any one of claims 2-13, wherein the at least one base cable support comprises a surface with curvature configured to complement the outermost shape of a cable.

15. A cable strain relief assembly, comprising:
at least one cable support comprising an upper cantilevered end, a lower mating section, and a medial elongated portion disposed between the upper cantilevered end and the lower mating section;
at least one base member comprising at least one base cable support, wherein the at least one base member is coupled to the at least one cable support member, and the at least one base member includes at least a portion oriented substantially perpendicular to the at least one cable support member; and
at least one clip assembly comprising a clip member and a clip fastener configured for engagement with the clip member, wherein the at least one clip assembly is configured for coupling with the at least one cable support member and the at least one base member.
